# EUROPEAN PATENT APPLICATION

(11) **EP 1 395 021 A1**
(43) Date of publication of application: **03.03.2004**
(21) Application number: 02705090.5
(22) Date of filing: 07.03.2002
(51) Int. Cl.: H04M 1/02, H04M 1/03, H04B 7/26, H05K 5/02

(54) **PORTABLE RADIO UNIT**

(30) Priority: 08.06.2001 JP 2001174133
(71) Applicant: MATSUSHITA ELECTRIC INDUSTRIAL CO., LTD., Kadoma-shi, Osaka 571-0050 (JP)
(72) Inventor: MANJO, Yoshiharu, Zhao Yang Qu, 100015 Beijing (CN)
(74) Representative: Grünecker, Kinkeldey, Stockmair & Schwanhäusser Anwaltssozietät
(86) International application number: PCT/JP2002/002145
(87) International publication number: WO 2002/102034

(57) **Abstract**

A task of the present invention is to stably hold a housing. Another task of the present invention is to prevent a user from carelessly approaching a portion of the housing, in which a built-in antenna is located, with his hand or finger even if where the portion is located is not clear for the user.

The present invention provides a portable wireless apparatus comprising: a transmitter 4a arranged at one end portion of a housing 1; a receiver 4b arranged at the other end portion of the housing 1; a built-in antenna 8 arranged close to the receiver 4b in the housing 1; and a recess portion 1c to be used as an index for preventing a user's finger to hold the housing 1 from being positioned in a portion where the built-in antenna 9 is arranged when the user holds the housing 1 so as to use the wireless apparatus, arranged on the receiver 4b side with respect to the portion where the built-in antenna 9 is arranged.

## Description

### TECHNICAL FIELD

The present invention relates to a cellular phone, a portable terminal unit and other portable wireless apparatus having a built-in antenna.

### BACKGROUND ART

A portable wireless apparatus, for example, a cellular phone is provided with a transmitter and receiver which are respectively arranged at both end portions of a housing on the surface side. In a region which is a half of the surface of the housing on the side on which the transmitter is arranged, this region will be referred to as a lower half region hereinafter, various key switches used for operation are arranged. On the other hand, in a residual region which is a half of the surface of the housing on the side on which the receiver is arranged, this region will be referred to as an upper half region hereinafter, an image display section is arranged.

In the case of the cellular phone composed as described above, for example, when a user inputs the telephone number of an opponent, the user conducts inputting operation in many cases while holding the housing of the cellular.phone with the palm of one of his hands.

### DISCLOSURE OF THE INVENTION

However, in the case where inputting operation is conducted on the key switches by the user while holding the housing with one of his hands, the user tends to hold only a lower half region of the housing in which the key switches are arranged. Therefore, inputting operation can not be stably conducted in many cases. Further, for example, when the user communicates with an opponent on the telephone, the user tends to hold only a lower half region on the rear side of the housing. Accordingly, the receiver on the surface side of the housing can not be closely contacted with the user's ear, and it is impossible for the user to clearly listen to voices of the opponent in many cases.

Most of the conventional cellular phones are provided with a rod-shaped antenna protruding outside of the housing. Recently, there has been a tendency that the rod-shaped antenna is not used because sensitivity of the electronic device is enhanced and further performance of the antenna is enhanced. As a result, the rod-shaped antenna is not used but only a plate-shaped built-in antenna is used in many cases.

However, in this type cellular phone, it is impossible for the user to detect from the outside of the housing where the built-in antenna is arranged in the housing. Accordingly, when the user uses the cellular phone while holding the housing with one of the hands, the user's finger tends to cower a portion where the built-in antenna is built in. Accordingly, there is a high possibility that sensitivity of the built-in antenna is remarkably deteriorated.

The present invention has been accomplished to solve the above conventional problems. It is an object of the present invention to provide a portable wireless apparatus characterized in that: a housing can be stably held with the user's hand; and.even if it is not clear for the user where a built-in antenna is arranged in the housing, the apparatus is composed so that the user's fingers holding the housing can not carelessly come into close-contact with the portion of the housing in which the built-in antenna is arranged.

In order to accomplish the above object, the present invention provides a portable wireless apparatus comprising: a transmitter arranged at one end portion of a housing; a receiver arranged at the other end portion of the housing; and a recess portion, in which a user's finger tip to hold the housing is put, arranged on the rear side of the housing with respect to the surface side on which the transmitter and receiver are arranged, in a portion opposed to the receiver or in a portion on the transmitter side of the portion opposed to the receiver.

The present invention also provides a portable wireless apparatus comprising: a transmitter arranged at one end portion of a housing; a receiver arranged at the other end portion of the housing; a built-in antenna arranged close to the receiver in the housing; and a recess portion to be used as an index for preventing a user' s finger to hold the housing from being located in a portion where 'the built-in antenna is arranged when the user holds the housing so as to use the' wireless apparatus, arranged on the receiver side with respect to the portion where the built-in antenna is arranged.

Therefore, according to the present invention, when a user holds the housing with his hand, at least one of the fingers of the hand is put in the recess provided in the portion opposed to the receiver on the rear face of the housing or provided in a portion close to the portion opposed to the receiver on the rear face of the housing, and then the housing can be stably held.

According to the present invention, the portion in which the built-in antenna is provided can be easily prevented from being covered with the user's hand or finger to hold the housing. Therefore, transmission and reception can be conducted at high sensitivity without deteriorating sensitivity of the built-in antenna.

### BRIEF DESCRIPTION OF THE DRAWINGS

In the drawings:
Fig. 1 is a perspective view showing a cellular phone relating to the present invention;
Fig. 2 is an arrangement view showing an outline of the section of the cellular phone shown in Fig. 1; and
Fig. 3 is a schematic illustration showing a state in which the cellular phone is used.

In this connection, reference marks in the drawings represent components as follows. Reference mark 1a is a housing on the front side, reference mark 1b is a housing on the rear side, reference mark 1c is a recess portion, reference mark 2 is an accommodating section, reference mark 3 is a battery, reference mark 4a is a transmitter, reference mark 4b is a receiver, reference mark 5 is a connector used for data communication, reference mark 6 is a printed board, reference mark 7 is a keyboard, reference mark 8 is a liquid crystal display, reference mark 9 is a built-in antenna, reference mark 11 is a speaker and reference mark 12 is a display means.

### BEST MODE FOR CARRYING OUT THE INVENTION

Referring to the accompanying drawings, an embodiment of the present invention will be explained below.

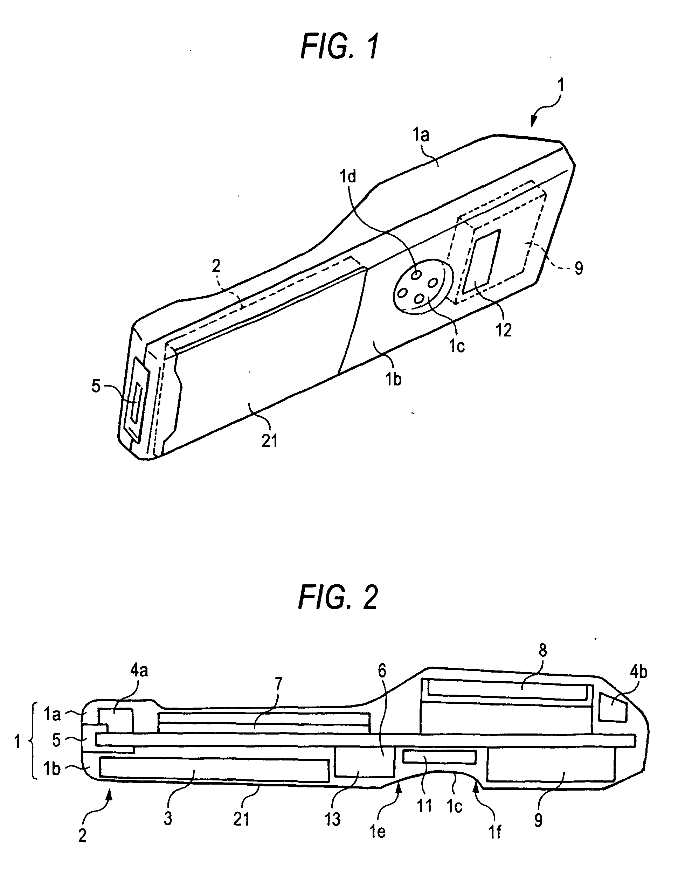

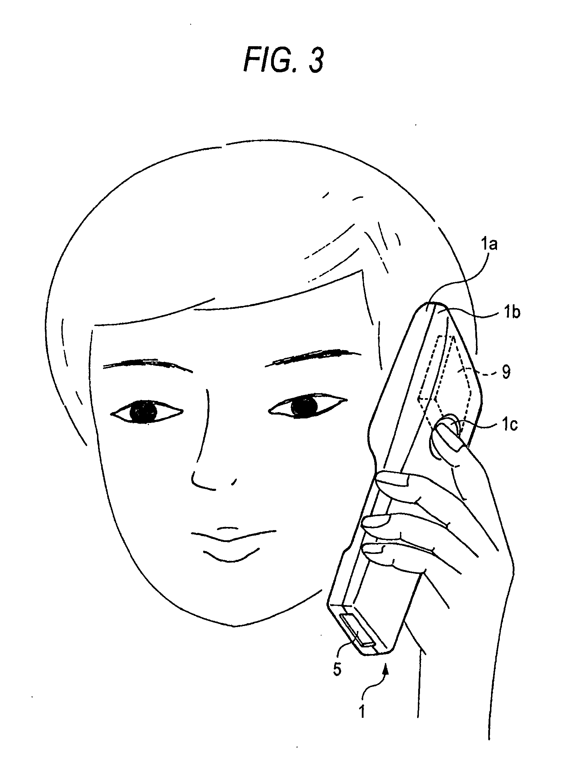

The drawings show an embodiment of the portable wireless apparatus relating to the present invention. Fig. 1 is a perspective view showing a rear face of the portable wireless apparatus of the present invention, Fig. 2 is a sectional side view showing an outline of the portable wireless apparatus, and.Fig. 3 is a view showing a state in which the portable wireless apparatus is used. In the above embodiment, a cellular phone is assumed to be the portable wireless apparatus. However, it should be noted that the portable wireless apparatus is not limited to a cellular phone. As long.as it is a portable terminal unit capable of communicating by wireless, any portable terminal unit can be used as the portable wireless apparatus.

In Figs. 1 and 2, the housing 1 is composed of a front side housing 1a and rear side housing 1b. Although not shown in the drawing, the front side housing 1a includes: a through-hole for the keyboard 7; a window through' which the liquid crystal display 8 is seen; a sound hole for the transmitter; and a sound hole for the receiver.

In the rear side housing 1b, there is provided a battery accommodating section 2. The cover 21 having the battery 3 is detachably attached to this battery accommodating section 2. At both end portions of the housing 1 composed of the front side housing 1a and the rear side housing 1b, the transmitter 4a and the receiver 4b are respectively built in. At the end portion of the housing 1 in which the transmitter 4a is arranged, there is provided a connector 5 used for data communication.

In the housing 1, there is provided a printed board 6. On the front side of the printed board 6, in a portion close to the transmitter 4a, there is provided a keyboard 7. On the front side of the printed board 6, in a portion close to the receiver 4b, there is provided a liquid crystal display 8. On the rear side of the printer board 6, there are provided various electric parts 13. On the rear side of the printed board 6, in a portion close to the receiver 4b, there is provided a plate-shaped built-in antenna 9.

On the side close to the transmitter 4a with respect to the built-in antenna 9, there is provided a speaker 11 to generate a ringing tone. In a portion of the rear side housing 1b opposed to the speaker 11, there is provided a recess portion 1c, which becomes an index to position a hand or finger for holding the housing 1 when the portable wireless apparatus is used so that the built-in antenna 9 can not be covered with the hand or finger.

Therefore, the size of this recess portion 1c is determined so that a finger tip of a user can be put into the recess 1c, usually, the forefinger can be put into the recess 1c. Alternatively, the size of this recess portion 1c is determined to be a little larger than the size in which the forefinger can be put into the recess 1c. In order to make the user easily put his finger into the recess portion 1c, for example, the recess portion 1c is formed into an accurate circle or an ellipse. Concerning the profile of this recess portion 1c, as shown in Fig. 2, in order for the user to easily put his finger from the lower side of the housing 1 into the recess, the inclination of the lower side face 1e is made to be smaller than that of the upper side face 1f.

On the bottom face of the recess portion 1c, there is provided a sound hole 1d from which a sound of the speaker 11 is emitted. In one of the front side housing and the rear side housing, which are opposed to the built-in antenna 9, there is provided a display means 12 which is an index displaying that the built-in antenna exists in this portion. In this display means 12, for example, there is an explanation "Antenna is arranged here", or alternatively there is a caution "Don't cover this portion with your hand because the antenna is arranged here".

As explained above, in the above embodiment, the built-in antenna 9 is arranged in a portion of the housing 1 close to the receiver 4b. Accordingly, in the case where the housing 1 is held so as to use the wireless apparatus, since the side'opposite to the side on which the built-in antenna 9 is arranged is usually held by the user, that is, the side on which the transmitter 4a is arranged is held, that is, a portion of the housing 1 where the keyboard is arranged is held. Accordingly, there is a small possibility that a hand or finger to hold the housing 1 comes close to the portion where the built-in antenna 9 is arranged.

In the above embodiment, in a portion of the' housing 1 on the side close to the transmitter 4a with respect to the built-in antenna 9, there is provided a recess portion 1c which becomes an index to be used so that a hand or finger to hold the housing 1 can not be located in a portion of the housing 1 opposed to the built-in antenna 9. Therefore, due to the above index, the hand or finger to hold the housing 1 can not be located in a portion where the built-in antenna is arranged.

In other words, in the case where the wireless apparatus is used while a user is holding the housing 1, as shown in Fig. 3, the forefinger is inserted into the recess portion 1c and the other fingers hold the housing 1. Then, no hand or finger is located in the portion where the built-in antenna 9 is arranged. Accordingly, a chance of the deterioration of sensitivity of the built-in antenna 9 caused by the approach of the hand or finger to the built-in antenna 9 can be reduced as small as possible.

Further, in the above embodiment, the recess portion 1c is opposed to the speaker 11, and the sound hole 1d is formed on the bottom face of the recess portion 1c. Therefore, the sound hole 1d is not blocked in the waiting time of the wireless apparatus, and a ringing sound can be effectively emitted from the speaker.

Since the housing 1 is made thin, the other electronic parts are not attached at the position where the speaker 11 is arranged. Accordingly, a gap can be easily formed in this portion inside the housing 1. Therefore, this structure is advantageous in that the recess portion 1c can be effectively formed by utilizing this gap.

In the above embodiment, the display means 12 for displaying that the built-in antenna 9 exists at the position is arranged in a portion of the housing 1 where the built-in antenna 9 is located. Therefore, it is possible for a user to hold the housing 1 while evading the portion where the built-in antenna 9 is located while fixing the user's aim at this display means 12. In this way, the built-in antenna 9 is not affected by the hand or finger to hold the housing 1.

In this connection, in this embodiment, in order to prevent the built-in antenna 9 from being covered with the hand or finger, the recess portion 1c is provided. However, it should be noted that the position where the built-in antenna 9 is arranged is not limited to this specific position. In this case, if this recess portion is provided in a portion of the rear side housing opposed to the receiver or in a portion closer to the transmitter than this portion, at least one of the fingers of the hand to hold the housing 1 is inserted into this recess portion. Due to the foregoing, the housing can be more stably held.

In this connection, this application is based on Japanese Patent Application No. 2001-174133 filed on June 8, 2001. The content of the above Japanese Patent Application is taken in as a reference.

### INDUSTRIAL POSSIBILITY

As explained above, according to the present invention, there is provided a portable wireless apparatus comprising: a transmitter arranged at one end portion of a housing; a receiver arranged at the other end portion of the housing; and a recess portion, in which a user's finger tip to hold the housing is put, arranged on the rear side of the housing with respect to the surface side on which the transmitter and receiver are arranged, in a portion opposed to the receiver or in a portion on the transmitter side of the portion opposed to the receiver. Therefore, when a finger is inserted into this recess portion, the housing can be held by this recess portion.. Accordingly, the housing can be held stably.

According to the present invention, the built-in antenna is arranged on the side close to the receiver of the housing, and on the side of the built-in antenna close to the transmitter, there is provided a recess portion which becomes an index to be used so that a hand or finger to hold the housing can not be located in a portion opposed to the built-in antenna when the wireless apparatus is used while a user is holding the housing. Therefore, when the housing is held by utilizing this recess portion, even if it is not clear for the user where the built-in antenna is located in the housing, it is possible to prevent the user from coming into contact with the portion, in which the built-in antenna is located, with his hand or finger. Therefore, it is possible to provide an effect that transmission and reception can be conducted with high sensitivity at all times without deteriorating sensitivity of the built-in antenna.

As shown in the embodiment, in the case where an index to indicate the portion of the housing, in which the built-in antenna is located, is provided, it is possible for the user to hold the housing while fixing the user's aim at this index. Accordingly, the built-in antenna can not be affected by the user's hand or finger when the finger or hand to hold the housing is kept at a distance from the portion.

## Claims

1. A portable wireless apparatus comprising:
a transmitter arranged at one end portion of a housing;
a receiver arranged at the other end portion of the housing; and
a recess portion, in which a user's finger tip to hold the housing is put, arranged on the rear side of the housing with respect to the surface side on which the transmitter and receiver are arranged, in a portion opposed to the receiver or in a portion on the transmitter side of the portion opposed to the receiver.

2. A portable wireless apparatus comprising:
a transmitter arranged at one end portion of a housing;
a receiver arranged at the other end portion of the housing;
a built-in antenna arranged close to the receiver in the housing; and
a recess portion to be used as an index for preventing a user's finger to hold the housing from being located in a portion where the built-in antenna is arranged when the user holds the housing so as to use the wireless apparatus, arranged on the receiver side with respect to the portion where the built-in antenna is arranged.

3. A portable wireless apparatus according to claim 1 or 2, further comprising: a speaker for generating a ringing sound arranged in a portion inside the housing opposed to the recess portion; and a sound hole formed in a bottom portion of the recess portion.

4. A portable wireless apparatus according to claim 1 or 2, further comprising: a display means for describing an explanation to inform the user of existence of the antenna, arranged in a portion of the housing opposed to the built-in antenna or describing a caution to prohibit the portion from being covered with the user's hand.
